# EUROPEAN PATENT APPLICATION

(11) **EP 3 726 416 A1**
(43) Date of publication of application: **21.10.2020**
(21) Application number: 20161288.4
(22) Date of filing: 05.03.2020
(51) Int. Cl.: G06F 30/12, G06F 119/18

(54) **DESIGN SUPPORT SYSTEM, DESIGN VERIFICATION METHOD, AND DESIGN VERIFICATION PROGRAM**

(30) Priority: 19.04.2019 JP 2019079931
(71) Applicant: Hitachi, Ltd., Tokyo 100-8280 (JP)
(72) Inventor: KAWAMOTO, Hiroki, Tokyo, 100-8280, (JP); ONODERA, Makoto, Tokyo, 100-8280, (JP); SHINTANI, Masaki, Tokyo, 100-8280, (JP); KONGOU, Chikara, Tokyo, 100-8280, (JP); ABE, Takeshi, Tokyo, 100-8280, (JP); KAMEI, Akira, Tokyo, 100-8280, (JP); KURATA, Takeshi, Tokyo, 100-8280, (JP)
(74) Representative: Mewburn Ellis LLP

(57) **Abstract**

A design support system for verifying 3D-CAD data includes a common module database storing a plurality of common modules for processing the 3D-CAD data, a rule file database which stores a plurality of rule files for defining a procedure for obtaining a verification feature amount from the 3D-CAD data, and violation information based on the verification feature amount using the common module, and a design support apparatus. The design support apparatus calls a common module according to the procedure defined in the rule file and executes the common module on the 3D-CAD data, and determines whether the design requirement is violated on the basis of the violation information defined in the rule file and the verification feature amount obtained according to the procedure.

## Description

### BACKGROUND OF THE INVENTION

### 1. Field of the Invention

The present invention relates to a design support system, a design verification method, and a design verification program.

### 2. Description of the Related Art

In product design, three-dimensional CAD (Computer Aided Design) has become widespread. The three-dimensional CAD (hereinafter, referred to as 3D CAD) is a tool for designing parts and members designed by designers as a three-dimensional model in 3D space, and is used in the design departments of many companies. However, in 3D CAD, a virtual three-dimensional model can be created freely on a computer while a designer must design a part shape while observing many rules. For example, in a case where a plate-shaped component made of resin is a material, even if the thickness of the plate-shaped component can be set freely on 3D CAD, if it is too thick, it will not be cooled uniformly in the molding process, and problems will easily occur in the manufacturing process. For this reason, in product design, for example, there is a rule that "in resin design, the thickness must be created within a certain range". The rules that the designer should follow are called design requirements herein.

If a design drawing is created without correctly understanding such design requirements and a defect is discovered in the manufacturing process, a redesign for correction occurs, causing a delay in commercialization. Non-Patent Document 1 (MASAYUKI HARIYA et al. "Development of Design Awareness Support System" Proceedings of 22nd Design Engineering and System Division Lecture Meeting of the Japan Society of Mechanical Engineers (2012.9.26-28)) and Non-Patent Document 2 (HARIYA, M. et al., "Technique for Checking Design Rules for Three-Dimensional CAD Data", Proc. IEEE Conf. Computer Science and Information Technology (ICCSIT), pp. 296-300, 2010) disclose support systems for making designers aware of past product design knowledge from the initial stage of design. In many cases, the 3D-CAD data has only shape information (three-dimensional model) of designed parts and the like. On the other hand, the design requirements are defined as the size and arrangement of characteristic shapes (for example, ribs and bosses in molded products, punched holes and bending in sheet metal processing). For this reason, Non-Patent Document 1 and Non-Patent Document 2 disclose systems that automatically identify locations corresponding to the design requirements from the 3D-CAD data by shape recognition from a three-dimensional model of 3D CAD and automatically collate with the design requirements.

### SUMMARY OF THE INVENTION

If design verification of 3D-CAD data can be performed on a computer as well as design using 3D CAD, the quality of design using 3D CAD can be improved. Herein, it is a matter of course that the design requirements applied to the design target is correctly reflected on a design target. However, in general, such design requirements are not necessarily systematically organized and managed at the design site. Further, in a case where the design target is a part or member having a complicated shape such as an aircraft or an automobile, there may be thousands to hundreds of thousands of design requirements. In addition, the design requirements are reviewed from time to time due to quality improvement activities and changes in regulations by laws.

Therefore, if a verification program is created one by one according to the design requirements, it is difficult to construct and update the design verification system. A bottleneck is that a designer who is familiar with the design requirements does not always have sufficient knowledge and experience about programming.

In order to eliminate re-work from a manufacturing stage to a design stage, it should be made sure that important design requirements for the design target be covered and checked. In addition, it is necessary to establish design support systems and environments that are easy to maintain according to changes in the design requirements.

The present invention has been made in view of these problems, and an object thereof is to propose a design support system that enables a computer to verify a 3D-CAD design while responding to a vast amount of design requirements and responding to changes in design requirements.

A design support system according to an aspect of the present invention is a design support system that verifies whether 3D-CAD data satisfies design requirements, and includes a common module database which stores a plurality of common modules to perform a process on 3D-CAD data or a feature amount extracted from the 3D-CAD data, a rule file database which stores a plurality of rule files for defining a procedure for obtaining a verification feature amount for verifying a design requirement from the 3D-CAD data, and violation information for determining whether the design requirement based on the verification feature amount is violated using a common module stored in the common module database, and a design support apparatus. When a first rule file corresponding to the design requirement to be verified with respect to predetermined 3D-CAD data is selected from the rule file database, the design support apparatus calls a common module stored in the common module database according to the procedure defined in the first rule file and executes the common module on the predetermined 3D-CAD data, and determines whether the design requirement corresponding to the first rule file is violated on the basis of the violation information defined in the first rule file and the verification feature amount obtained according to the procedure.

According to the invention, a design support system is realized which enables verification of 3D-CAD design by a computer while responding to enormous design requirements and changing design requirements.

Other objects and novel features will become apparent from the description of the specification and the accompanying drawings.

### BRIEF DESCRIPTION OF THE DRAWINGS

Fig. 1 is a rule file creation flow;
Fig. 2 is an example of a CAD shape;
Fig. 3 is a rule file creation screen;
Fig. 4 is a rule file creation screen;
Fig. 5 is a rule file creation screen;
Fig. 6 is a common module list screen;
Fig. 7 is a rule file creation screen;
Fig. 8 is a rule file creation screen;
Fig. 9 is a rule file creation screen;
Fig. 10 is an example of a design environment in which a design support apparatus is used;
Fig. 11 is a hardware configuration example of the design support apparatus;
Fig. 12 is a design verification flow;
Fig. 13 is a design verification screen; and
Fig. 14 is a design verification screen.

### DESCRIPTION OF THE PREFERRED EMBODIMENTS

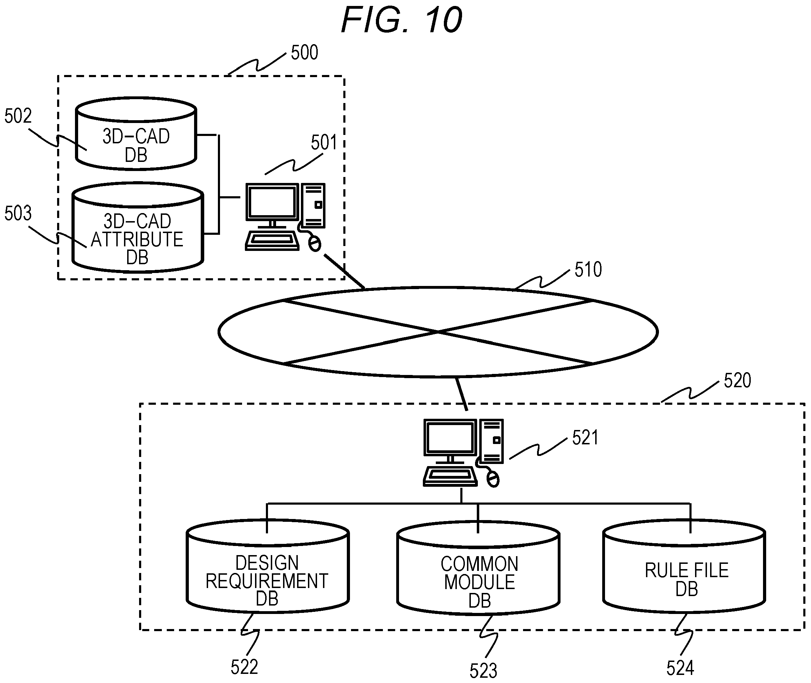

Fig. 10 illustrates an example of a design environment in which a design support apparatus according to this embodiment is used. A design system 500 includes a design apparatus 501 that designs three-dimensional shapes of parts and members using 3D CAD. A 3D-CAD database 502 stores 3D-CAD data which is shape information (three-dimensional model) of a design target designed by the design apparatus 501. A 3D-CAD attribute database 503 stores design target names and attribute information. Since the 3D-CAD data stored in the DB 502 is only the shape information representing the design target by planes, lines, and points, attribute information other than the shape information is stored in the DB 503 in association with the 3D-CAD data.

The design support system 520 includes a design support apparatus 521 that verifies whether the 3D-CAD data designed by the design apparatus 501 using 3D CAD satisfies design requirements applied to the design target. The design requirement database 522 stores design requirements requested by a design department or a designer to comply with the design target. The design requirement may be determined individually for each design target, or may be determined commonly for many design targets. In addition, although an example in which a database is created as an electronic file is illustrated herein, the design requirement that is made into a rule file may be a design requirement that is stored by a paper medium or as know-how. Regardless of the medium in which the design requirements are stored, the design support apparatus 521 of this embodiment drops the design requirements into a rule file (definition document) stored in the rule file database 524, and verifies the 3D-CAD data according to a procedure specified in the rule file to check whether the designed three-dimensional model violates the design requirements. Although details will be described later, in this embodiment, the 3D-CAD data is verified by applying the common module (program) stored in the common module database 523 according to the rule file.

The design system 500 and the design support system 520 are preferably connected via a network 510.

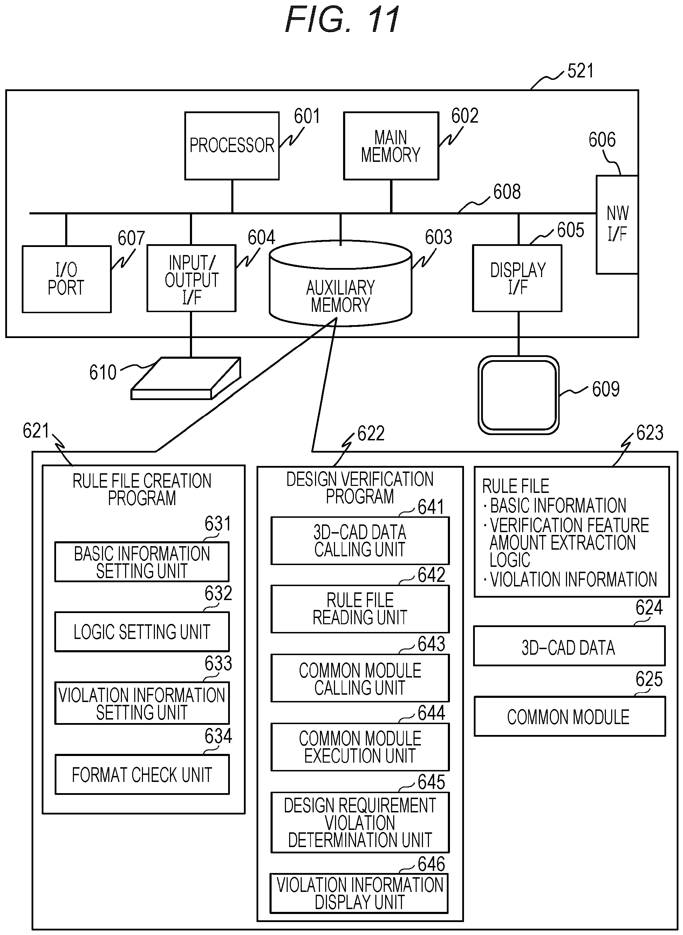

Fig. 11 illustrates a hardware configuration example of the design support apparatus 521. The design support apparatus 521 includes a processor 601, a main memory 602, an auxiliary memory 603, an input/output interface 604, a display interface 605, a network interface 606, and an input/output (I/O) port 607, which are connected by a bus 608. The input/output interface 604 is connected to an input device 610 such as a keyboard and a mouse, and the display interface 605 is connected to a display 609 to realize a GUI (Graphical Use Interface). A network interface 606 is an interface for connecting to the network 510. The auxiliary memory 603 is usually configured by a nonvolatile memory such as an HDD, a ROM, or a flash memory, and stores a program executed by the design support apparatus 521 and data to be processed by the program. The main memory 602 includes a RAM, and temporarily stores a program and data necessary for executing the program according to instructions from the processor 601. The processor 601 executes a program loaded from the auxiliary memory 603 to the main memory 602. The design support apparatus 521 can be realized by a PC (Personal Computer) or a server for example.

The auxiliary memory 603 stores a rule file creation program 621 and a design verification program 622. These programs may be stored in an optical recording medium such as a CD or a DVD via an optical drive connected to the I/O port 607, or stored in a magnetic recording medium via an external HDD. The program stored in the magnetic recording medium may be stored in the auxiliary memory 603 through an external HDD, or may be stored in the auxiliary memory 603 via the network 510. In the auxiliary memory 603, 3D-CAD data 624 (design target) as a verification target, a rule file 623 for defining a verification procedure for design requirements, and a common module 625 are stored as data or programs used by the rule file creation program 621 or the design verification program 622. The 3D-CAD data 624 is called from the 3D-CAD DB 502 and stored, the rule file 623 is called from the rule file DB 524, and the common module 625 is called from the common module DB 523 and stored. Further, in this embodiment, the functions of the design support apparatus 521 are realized in cooperation with other hardware by executing a program stored in the auxiliary memory 603 by the processor 601. A program executed by a computer, a function or means for realizing the function may be referred to as "function", "unit", "module", or the like.

Hereinafter, the description will be given about a rule file creation process for dropping design requirements into a rule file and a design verification process for verifying whether a three-dimensional model designed by 3D CAD using the rule file and the common module satisfies the design requirements.

### (1) Rule File Creation Process

In this embodiment, the rule file creation process is realized by the design support apparatus 521 executing the rule file creation program 621. As described above, in the rule file creation process, a rule file that defines the procedure for verifying the shape information of 3D CAD is generated from the design requirements held in various media in the design department. In general, the design requirements only describe the contents to be observed by the design target (parts, members). In order to identify a violation location from the shape information, the logic to extract the check location from the 3D-CAD data and a determination criterion for determining a violation are necessarily defined as a procedure. With this configuration, the designer can verify enormous design requirements on various media on the design support system 520 for the 3D-CAD data.

The rule file creation program 621 includes a basic information setting unit 631, a logic setting unit 632, a violation information setting unit 633, and a format check unit 634.

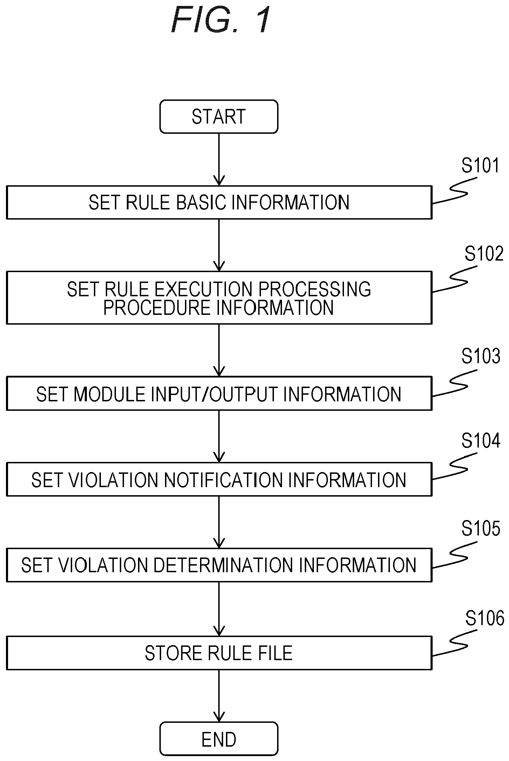

Fig. 1 illustrates a flow of creating a rule file for verifying whether design requirements applied to the design target (parts, members, etc.) of 3D CAD are observed. A rule file is created by sequentially setting five types of information, rule basic information, rule execution processing procedure information, module input/output setting information, violation notification information, and violation determination information, according to the flow of Fig. 1.

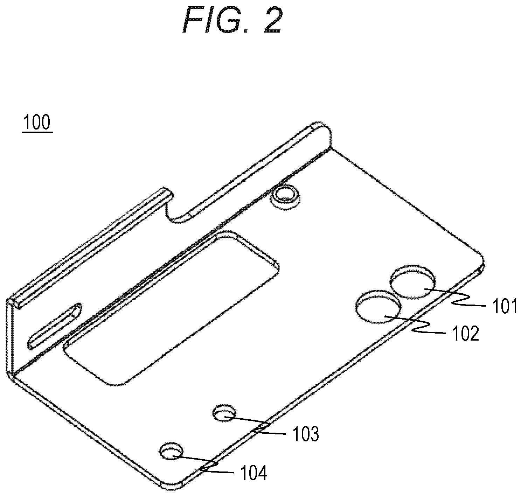

Hereinafter, the description will be given about an example of creating a rule file for the pitch of holes provided in a sheet metal part. Fig. 2 illustrates an example of the CAD shape of the part (sheet metal part) 100. As illustrated in Fig. 2, the part 100 is provided with a plurality of holes 101 to 104. In the sheet metal processing, if the holes are provided close to each other, there may be a risk of distortion around the hole during the sheet metal machining. For this reason, when a plurality of holes are provided in a sheet metal part, it is a design requirement that the pitch of the holes is a certain size or more.

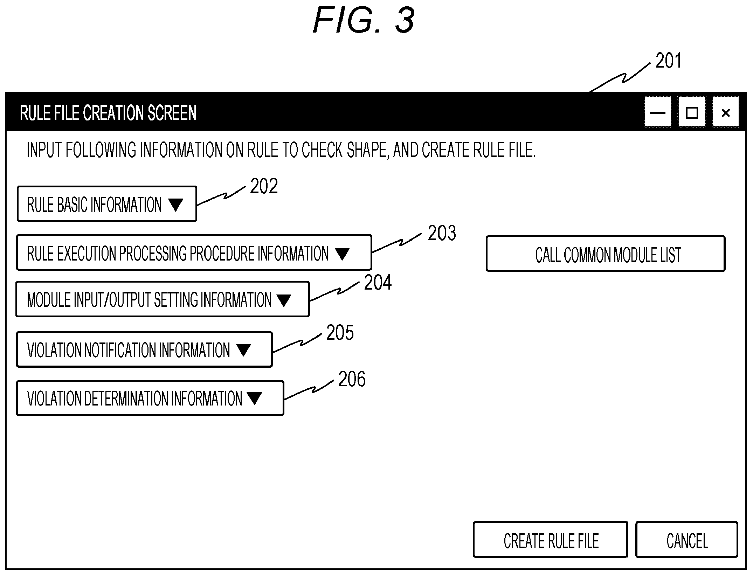

Fig. 3 illustrates a rule file creation screen 201. The rule file creation screen 201 is provided with a plurality of information setting buttons 202 to 206. The information setting buttons 202 to 206 correspond to Steps S101 to S105 in the creation flow of Fig. 1. By clicking the information setting button, a box for setting information is opened, and the designer can create a rule file by setting necessary information in the box. Further, the GUI of this embodiment is an example, and the screen configuration can be arbitrarily changed. For example, in the creation screen example in Fig. 3, the five types of information defined in the rule file are displayed in a list by the information setting buttons 202 to 206. One information setting button may be provided, and a type of information defined by the designer may be selected for one information setting button. Alternatively, boxes for setting the type of information may appear sequentially in the order of the flowchart of Fig. 1.

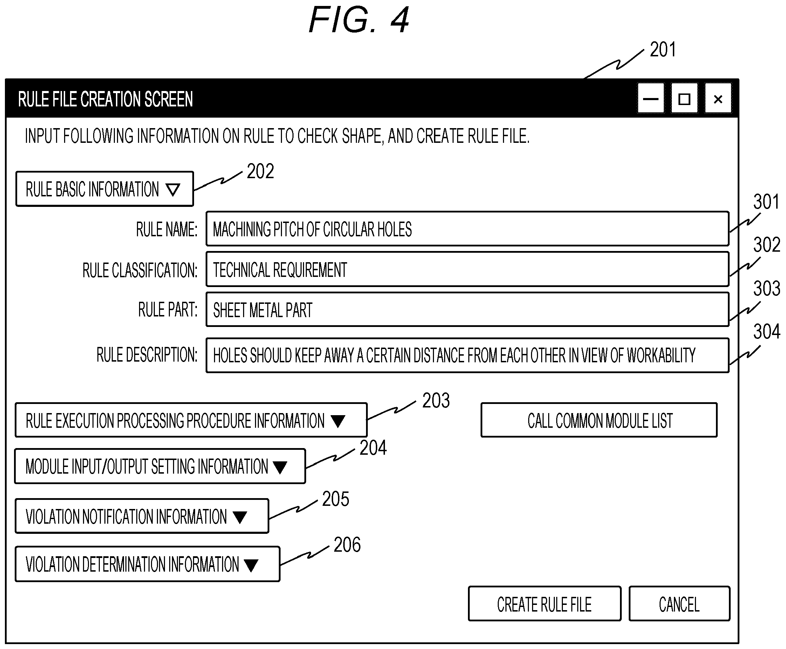

When the designer clicks the information setting button 202, the basic information setting unit 631 opens basic information boxes 301 to 304 for setting rule basic information (S101). The rule file creation screen 201 in this state is illustrated in Fig. 4. The basic information boxes 301 to 304 are input boxes for inputting rule names, rule classifications, rule parts, and rule descriptions, respectively. The rule name 301 is a name for uniquely identifying the rule file to be created, and it is desirable that the rule content be a name that is easy for the designer to understand. The detailed content of the rule is described as a rule description 304. In addition, in order to systematize the rule file to be created, a box for rule classification 302 and rule part 303 are provided. In this example, the classification according to a procedure in which the design requirement corresponding to the rule file is defined is set in the rule classification 302, and the design target is set in the rule part 303. Further, the above is an example, and the content set as rule basic information is not limited to the item described above. It is desirable to systematize design requirements applied to a 3D-CAD design target (parts, members, etc.) in the design department, and reflect the systematized design requirements in the 3D-CAD rule file. Therefore, it is desirable to provide an input box corresponding to a systematic axis (item) so that the rule file can be classified according to the systematized contents of items set as rule basic information.

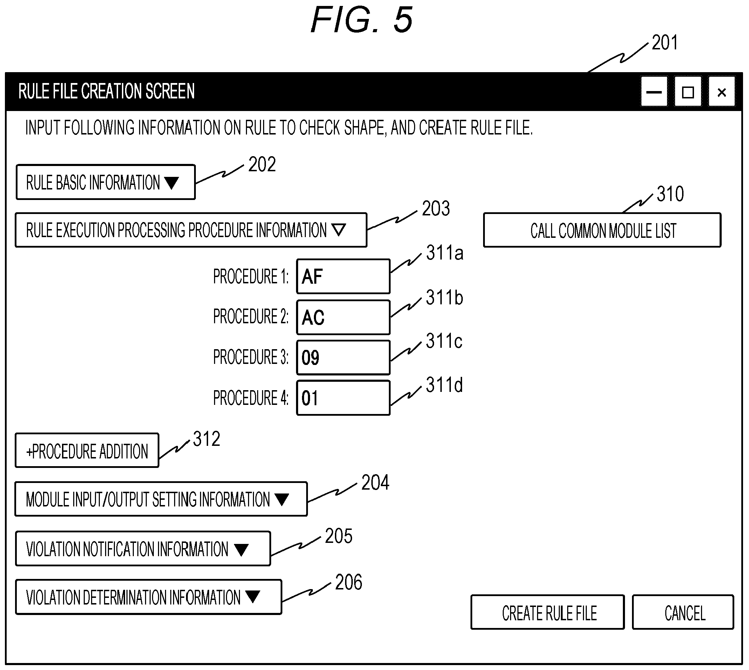

When the designer clicks the information setting button 203, the logic setting unit 632 opens a procedure box 311 for setting the rule execution processing procedure information (S102). Fig. 5 illustrates the rule file creation screen 201 in this state. In this embodiment, the rule file defines a procedure for verifying design requirements as a combination of common modules registered in advance. When a program is created for each design requirement, the more design requirements that are applied, the more difficult the maintenance is when the design requirements are changed or newly added. With this regard, maintenance can be facilitated by using a combination of common modules (programs). For example, for the design requirement of "make the hole pitch a certain size or more", the procedure for extracting a corresponding feature shape from the three-dimensional model of 3D CAD that has only shape information can be broken down into procedures such as "Identify the hole", "Specify the center position of a hole", and "Measure interval". This disassembled procedure is a procedure that is also executed for different design targets and design requirements, and such a procedure is registered in advance as a common module.

In Step S102, the designer drops the procedure for extracting the verification part (feature shape) related to the design requirement from the 3D-CAD data into the procedure using the common module. Further, by clicking a procedure add button 312 as needed, the procedure box 311 is additionally opened, and the number of procedures to be set can be increased. When the common module list call button 310 is clicked, a list of registered common modules is displayed.

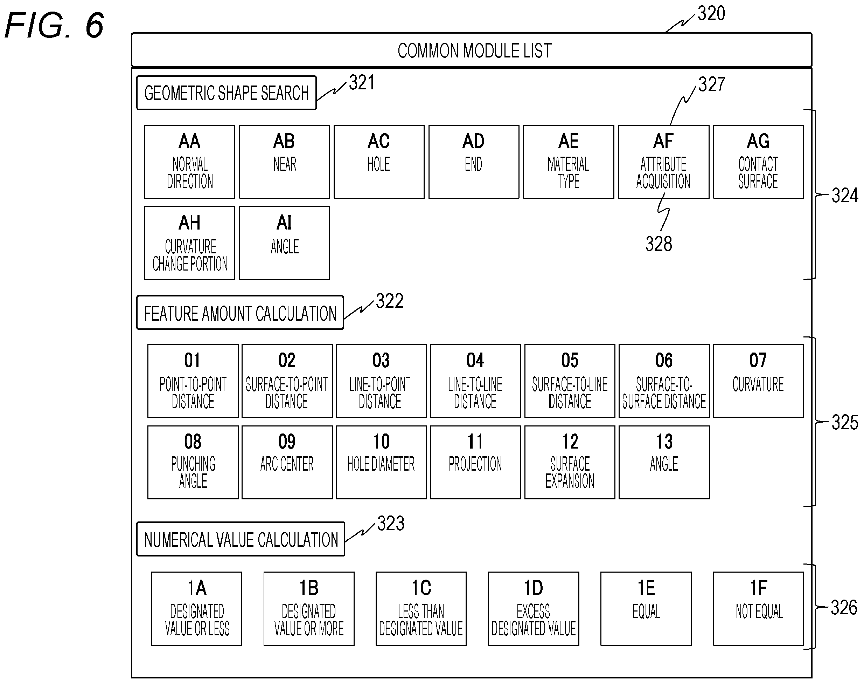

An example of the common module list screen 320 is illustrated in Fig. 6. On the common module list screen 320, module buttons 324 to 326 are displayed for categories 321 to 323, respectively. Each module button displays an ID 327 for designating a common module and a common module name 328 for displaying the contents of the common module. The common module list screen 320 is displayed on the rule file creation screen 201. By clicking one of the displayed module buttons 324 to 326, an ID for designating the common module is input to the procedure box 311 in the order of click. Procedure boxes 311a to 311d (Procedures 1 to 4) on the rule file creation screen 201 correspond to the order in which the common modules are executed (see Fig. 5).

The common modules exemplified in the common module list screen 320 in Fig. 6 will be described. The common modules are classified and displayed in a geometric shape search category 321, a feature amount calculation category 322, and a numerical value calculation category 323. The geometric shape search category 321 includes a common module for searching geometric shapes according to the feature shapes defined in the design requirements from the 3D-CAD data (three-dimensional model) of surfaces, lines, and points. The feature amount calculation category 322 includes a common module for calculating a feature amount that characterizes a feature shape such as a distance, a size, and an angle related to the feature shape. The numerical value calculation category 323 includes a common module that performs numerical operations. The designer defines the procedure for extracting the feature shape in the rule file using the common module. In the example of Fig. 5, in order to verify the design requirement of "make the hole pitch a certain size or more", the logic to extract the feature shape is set by executing the common modules "AF: Attribute Acquisition", "AC: Hole", "09: Arc Center", and "01: Point-to-point Distance" sequentially.

By the way, it is desirable that the content of the procedure to be a common module should be versatile in order to be applicable to a wide variety of three-dimensional models, and specific enough to allow the designer to recognize the process as having a certain degree of unity. In addition, in many cases, the next-stage common module may be processed using the processing result of the previous-stage common module as an input. Therefore, the common modules of this embodiment each have input/output parameters, and it is necessary to set input/output parameters of each common module in accordance with the contents of the design requirements.

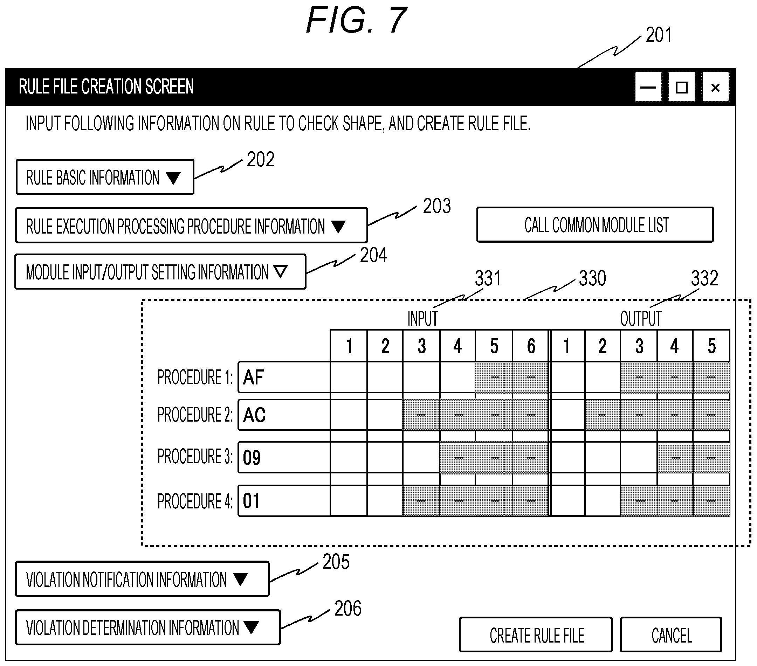

When the designer clicks the information setting button 204, the logic setting unit 632 opens a setting box 330 for setting module input/output information (S103). Fig. 7 illustrates the rule file creation screen 201 in this state. The setting box 330 displays input parameters 331 and output parameters 332 that are necessarily set for the common modules set in Step S102. In this example, the common module is set on the vertical axis, and the input/output parameters are set on the horizontal axis. Since the number of input/output parameters varies depending on the common module, in this example, the input field is set for each common module according to the input parameter that needs to be set and the output parameter that is output (a field with "-" means that the input/output parameter does not exist). The designer designates an argument referred to by the common module in this input field. This argument may be an output parameter of the previous-stage common module.

For example, in Procedure 1 "AF: Attribute Acquisition", the database 503 accumulating attribute information linked to the 3D-CAD data is referred by specifying four input parameters, and information for narrowing down the feature shape is output with two output parameters. In Procedure 2 "AC: Hole", the two input parameters from Procedure 1 are used, and the hole information included in the three-dimensional model is output with one output parameter. In Procedure 3 "09: Arc Center", the hole is designated by three input parameters, and the center of the hole is output with three output parameters. The input parameters of Procedure 3 include the output parameters of Procedure 2. In Procedure 4 "01: Point-to-point Distance", two points for measuring the distance are designated by two input parameters, and the distance between the designated points and the distance shape are output by two output parameters. The input parameters in Procedure 4 include the output parameters in Procedure 3.

Further, the number of output parameters of the previous-stage common module and the number of input parameters of the next-stage common module do not necessarily match. However, there may be information that is necessarily designated in addition to the processing target, or a part of the output of the previous-stage common module may be an input of the previous-stage common module. In this way, by connecting the input/output parameters of each common module, the feature shapes and the feature amounts are extracted from the three-dimensional model of 3D CAD according to the design requirements, and finally a logic can be created to obtain the verification feature amounts for verifying the design requirements. Further, an example in which the procedure is executed serially is illustrated herein as a simple example, but a procedure for branching or looping may be included.

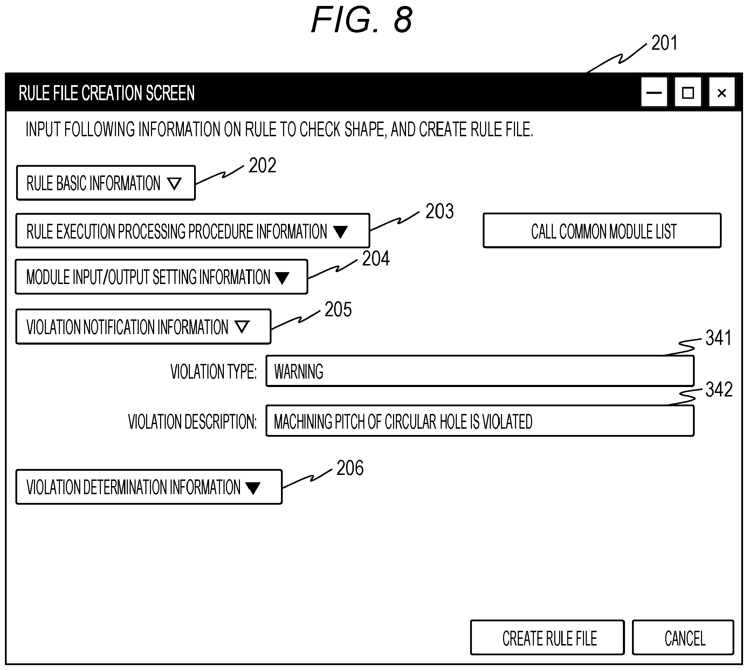

When the logic setting unit 632 executes Steps S102 and S103, the logic for obtaining the verification feature amount according to the design requirement is defined in the rule file. Therefore, in the subsequent steps, the rule check processing procedure according to the design requirement is set. When the designer clicks the information setting button 205, the violation information setting unit 633 opens violation notification boxes 341 to 342 for setting the violation notification information (S104). A rule file creation screen 201 in this state is illustrated in Fig. 8. The violation notification information is information displayed to the designer in a case where a design requirement violation is detected in the 3D-CAD data. The violation type 341 defines the level of violation such as "warning" or "information presentation" according to the seriousness. It is desirable to be able to selectively input violation levels determined in advance by the design department. A violation description 342 is a message displayed on a pop-up screen when a design requirement violation is detected.

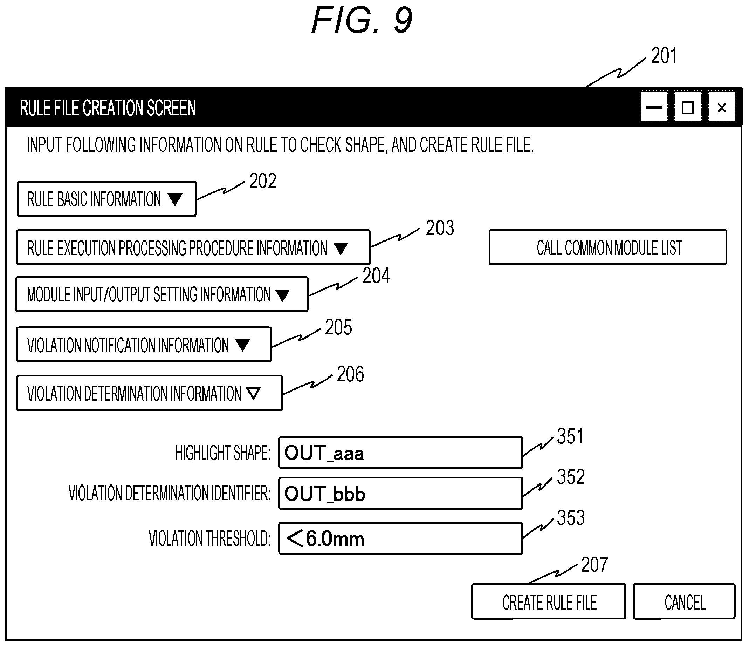

When the designer clicks the information setting button 206, the violation information setting unit 633 opens violation determination boxes 351 to 353 for setting the violation determination information (S105). The rule file creation screen 201 in this state is illustrated in Fig. 9. In the violation determination box 351, a feature shape to be verified by the program is set. In this example, since the hole is provided in the sheet metal part, an output parameter (herein, "OUT_aaa") indicating a hole included in the three-dimensional model output by the common module AC is designated. In the violation determination box 352, a feature amount for determining whether the program violates the design requirement is set. In this example, since the feature amount is a distance between holes, an output parameter (here, "OUT_bbb") indicating the distance between points (herein, the center of the hole) output by the common module 01 is designated. In this example, "OUT_bbb" is the verification feature amount. In this violation determination box 353, a threshold for determining whether the program is a design requirement violation is set. In this example, if the distance between the holes is too narrow (for example, less than 6.0 mm), it is considered a design requirement violation. Therefore, a threshold (in this case, "< 6.0 mm") is set to determine whether the verification feature amount is violated. Further, as will be described below, in a case where a design requirement is violated in the three-dimensional model, the shape that violates the design requirement is to be highlighted so that the designer can easily identify the violation location.

When the input of all information is completed, the designer clicks the rule file creation button 207. With this configuration, the created rule file is stored in the rule file DB 524 (S106). The rule file includes basic information, verification feature amount extraction logic, and violation information. There are the information set in S101 in the flow illustrated in Fig. 1, the information set in S102 to S103 (the order in which common modules are used, the input/output parameters of the common modules used), and the information set in S104 to S105 (violation determination requirement based on the verification feature amount, alarm display information). In storing the rule file, it is desirable to check a format error of the rule file by the format check unit 634. At least, for example, mandatory input items (such as part names and violation judgment thresholds) that have not been entered, and grammatical error checks (full-width/half-width checks, prohibited character checks, etc.) are performed at this stage. In a case where there are errors, it is possible to increase the certainty of the rule file by prompting the designer to input again.

### (2) Design Verification Process

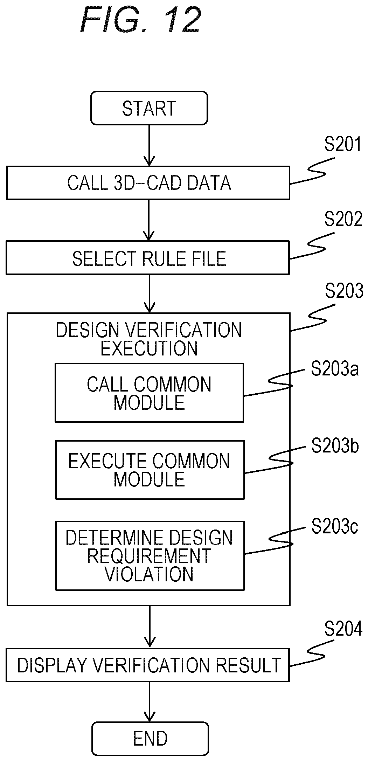

In this embodiment, the design verification process is realized by the design support apparatus 521 executing the design verification program 622. Fig. 12 illustrates a flow for verifying whether the shape information (3D-CAD data) designed by 3D CAD satisfies the design requirements. The design verification program 622 includes a 3D-CAD data calling unit 641, a rule file reading unit 642, a common module calling unit 643, a common module execution unit 644, a design requirement violation determination unit 645, and a violation information display unit 646 (see Fig. 11).).

First, the 3D-CAD data calling unit 641 calls 3D-CAD data (three-dimensional model (shape information)) to be verified from the 3D-CAD DB 502 (S201). At this time, it is desirable to interpret the shape information of 3D CAD and check whether it is established as a three-dimensional model. For example, a three-dimensional model in which surfaces are separated and a gap is formed in the same component is not established as a shape, and there is no meaning in verifying whether the design requirement is satisfied. In this case, the designer is warned of a design error, and the design verification process ends.

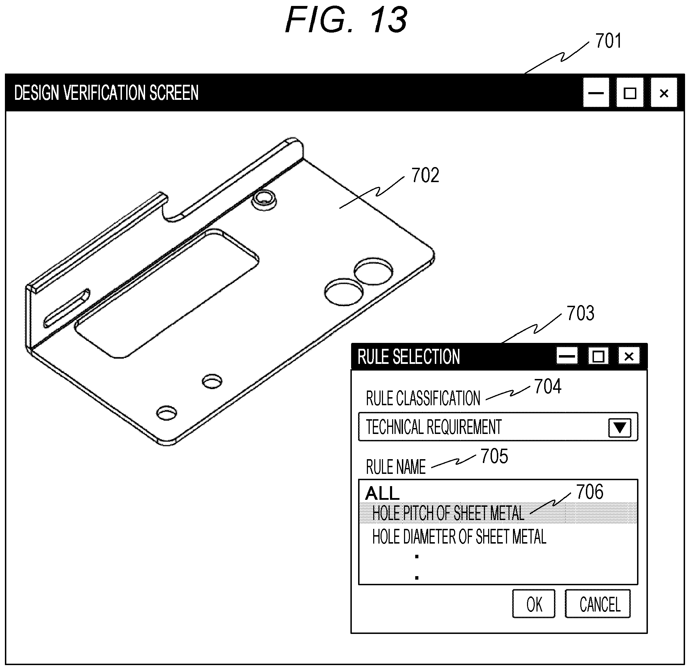

For the shape information called in S201, a rule file corresponding to the design requirement to be verified is selected (S202). Fig. 13 illustrates an example of the design verification screen 701. The rule file reading unit 642 displays a 3D CAD drawing 702 (design target) to be verified and a rule selection screen 703 on the design verification screen 701. In this example, the rule selection screen 703 displays the rule classification 704 and the rule name 705 in accordance with the basic information set in the rule file. The rule classification 704 displays the rule classification set in the rule file creation process. The rule name 705 displays the rule name of the rule file belonging to the selected rule classification 704. The designer selects a rule file corresponding to the design requirement to be verified by selecting the rule name displayed in the rule name 705 (in this case, it is specified by shading 706). Further, herein, by selecting "ALL" included in the rule name 705, the rule files included in the rule classification "Technical requirement" can be collectively checked. In a case where a large number of design requirements are verified, selection can be facilitated.

The rule file reading unit 642 calls the selected rule file from the rule file DB 524. At this time, the rule file reading unit 642 may be provided with a check function equivalent to the format check unit 634, and a mandatory input item such as non-input error check and a grammatical error check may be performed on the rule file. As described above, since the 3D-CAD data 624 and the rule file 623 to be verified are read into the design support apparatus 521, the design verification is executed according to the procedure defined in the rule file (S203).

The common module calling unit 643 reads the feature shape extraction logic of the rule file 623 and calls a necessary common module (S203a). Since the rule file 623 describes information on the common module used for extracting the feature shape, the common module DB 523 is searched on the basis of the ID or the common module name, and stored as the common module 625.

The common module execution unit 644 reads the feature shape extraction logic of the rule file 623, sets the input/output parameters defined in the rule file 623 in the common module 625, and executes the module (S203b). At the same time, the common module execution unit 644 also checks the certainty of the feature shape extraction logic of the rule file. For example, in the common module 01 (point-to-point distance), it is necessary to define two point shapes as input parameters. Herein, if only one point shape is specified in the rule file, the logic outputs an error as uncertain.

The common module call (S203a) and common module execution (S203b) are repeated for the number of common modules defined in the feature shape extraction logic of the rule file, and the verification feature amount is extracted to determine compliance/violation of design requirements. The design requirement violation determination unit 645 collates the verification feature amount extracted by the feature shape extraction logic and the violation information of the rule file 623, and determines whether there is a design requirement violation (S203c). For example, in a case where the verification feature amount (point-to-point distance) extracted according to the feature shape extraction logic of the rule file 623 is determined to be a violation based on the determination conditions described in the rule file, the corresponding part is extracted as a violation shape.

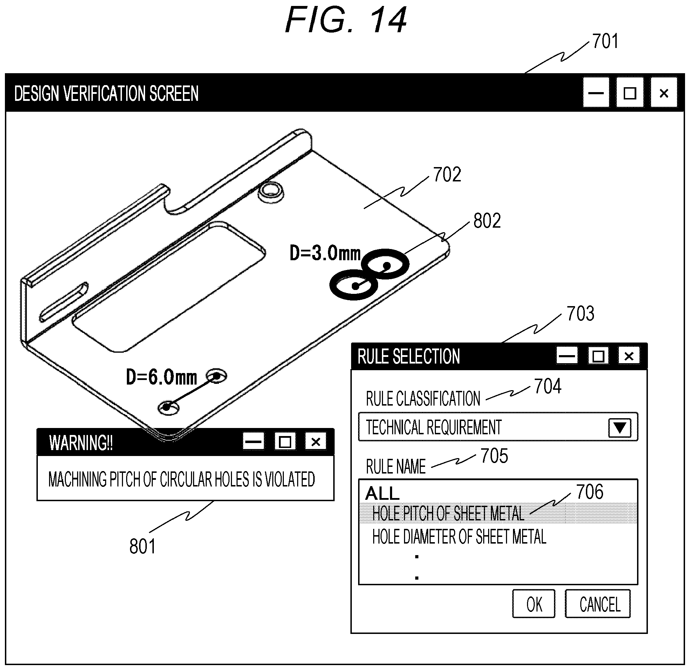

The violation information display unit 646 displays an alarm for the violation shape extracted by the design requirement violation determination unit 645 (S204). Fig. 14 illustrates an example of the design verification screen 701 displaying an alarm. On the basis of the violation information in the rule file 623, a warning is displayed on an alarm screen 801, the feature shape is displayed on the 3D CAD drawing 702, and the violation location is highlighted (for example, colored different from the CAD shape). Further, it is desirable not only to display but also to list numerical values related to the violation shape (in this case, the point-to-point distance in the CAD data, the point-to-point distance between in the design requirements) as needed. By selecting the highlighted portion 802, the designer can display the violation shape list, check the determination threshold, and correct the violation location. Further, if the design requirement is linked to the design requirement in the design requirement DB 522 corresponding to the violation shape list, the designer can confirm the design requirement again.

As mentioned above, this invention has been described according to the embodiments, but this invention is not limited to the content of the description. For example, an example is illustrated in which the design apparatus 501 and the design support apparatus 521 are implemented as separate computers as the design environment, but may be implemented with the same computer. In this case, for example, by making the design verification program a plug-in program of 3D-CAD design software, the designer can easily perform a requirement check for each 3D-CAD design. In addition, the design support program (rule file creation program, design verification program) of this embodiment may be realized on the cloud, and is not limited to the embodiment of the program.

## Claims

1. A design support system for verifying whether 3D-CAD data satisfies a design requirement, the design support system comprising:
a common module database which stores a plurality of common modules to perform a process on 3D-CAD data or a feature amount extracted from the 3D-CAD data;
a rule file database which stores a plurality of rule files for defining a procedure for obtaining a verification feature amount for verifying a design requirement from the 3D-CAD data, and violation information for determining whether the design requirement based on the verification feature amount is violated using a common module stored in the common module database; and
a design support apparatus,
wherein, when a first rule file corresponding to the design requirement to be verified with respect to predetermined 3D-CAD data is selected from the rule file database, the design support apparatus calls a common module stored in the common module database according to the procedure defined in the first rule file and executes the common module on the predetermined 3D-CAD data, and determines whether the design requirement corresponding to the first rule file is violated on the basis of the violation information defined in the first rule file and the verification feature amount obtained according to the procedure.

2. The design support system according to claim 1,
wherein, in a case where the design support apparatus determines that the design requirement corresponding to the first rule file is violated, the design support apparatus highlights a portion determined to be violated on a 3D-CAD screen indicating a shape of the predetermined 3D-CAD data.

3. The design support system according to claim 1,
wherein the common modules stored in the common module database include a plurality of categories, and
wherein the plurality of categories include a geometric shape search category for searching for a predetermined geometric shape, a feature amount calculation category for calculating a feature amount characterizing the predetermined shape, and a numerical value calculation category for performing numerical calculation.

4. The design support system according to claim 1,
wherein, in the rule file stored in the rule file database, as a procedure for obtaining the verification feature amount for verifying the design requirement from the 3D-CAD data, and an input/output parameter of the common module are set as an order of using the common modules stored in the common module database.

5. A design verification method for verifying whether predetermined 3D-CAD data satisfies a predetermined design requirement using a common module database and a design support apparatus, the common module database storing a plurality of common modules for performing a process on 3D-CAD data or a feature amount extracted from the 3D-CAD data,
wherein the design support apparatus uses the common module stored in the common module database to read a procedure for obtaining a verification feature amount for verifying the predetermined design requirement from the 3D-CAD data, and a rule file for defining violation information to determine whether the predetermined design requirement is violated on the basis of the verification feature amount,
wherein the design support apparatus calls the common module stored in the common module database according to the procedure defined in the rule file to execute the common module on the predetermined 3D-CAD data, and
wherein the design support apparatus determines whether the predetermined design requirement is violated on the basis of the violation information defined in the rule file and the verification feature amount obtained according to the procedure.

6. The design verification method according to claim 5,
wherein, in a case where the design support apparatus determines that the predetermined design requirement is violated, the design support apparatus highlights a portion determined to be violated on a 3D-CAD screen indicating a shape of the predetermined 3D-CAD data.

7. The design verification method according to claim 5,
wherein the common modules stored in the common module database include a plurality of categories, and
wherein the plurality of categories include a geometric shape search category for searching for a predetermined geometric shape, a feature amount calculation category for calculating a feature amount characterizing the predetermined shape, and a numerical value calculation category for performing numerical calculation.

8. The design verification method according to claim 5,
wherein, in the rule file, as a procedure for obtaining the verification feature amount for verifying the predetermined design requirement from the 3D-CAD data, and an input/output parameter of the common module are set as an order of using the common modules stored in the common module database.

9. A design verification program causing a computer to verify whether predetermined 3D-CAD data satisfies a predetermined design requirement using a common module database where a plurality of common modules for performing a process on 3D-CAD data or a feature amount extracted from the 3D-CAD data, the design verification program causing a computer to execute:
reading a procedure for obtaining a verification feature amount for verifying the predetermined design requirement from the 3D-CAD data, and a rule file for defining violation information to determine whether the predetermined design requirement is violated on the basis of the verification feature amount by using the common module stored in the common module database;
calling the common module stored in the common module database according to the procedure defined in the rule file to execute the common module on the predetermined 3D-CAD data; and
determining whether the predetermined design requirement is violated on the basis of the violation information defined in the rule file and the verification feature amount obtained according to the procedure.

10. The design verification program according to claim 9, the program causing a computer to further execute
highlighting a portion determined to be violated on a 3D-CAD screen indicating a shape of the predetermined 3D-CAD data in a case where the design support apparatus determines that the predetermined design requirement is violated.
